Europäisches Patentamt

European Patent Office

Office européen des brevets

(19)

(11) Veröffentlichungsnummer: **0 313 731 B1**

(12) # EUROPÄISCHE PATENTSCHRIFT

(45) Veröffentlichungstag der Patentschrift: 04.12.91

(51) Int. Cl.5: **B29C 65/18**

(21) Anmeldenummer: 88111585.1

(22) Anmeldetag: 19.07.88

(54) **Verfahren und Einrichtung zum Verschweissen von rohrförmigen Teilen aus Thermoplast.**

(30) Priorität: 23.09.87 CH 3680/87

(43) Veröffentlichungstag der Anmeldung:
03.05.89 Patentblatt 89/18

(45) Bekanntmachung des Hinweises auf die
Patenterteilung:
04.12.91 Patentblatt 91/49

(84) Benannte Vertragsstaaten:
AT BE CH DE ES FR GB IT LI NL SE

(56) Entgegenhaltungen:
EP-A- 0 020 915
AT-B- 312 270
DE-B- 2 316 749
GB-A- 1 549 169

(73) Patentinhaber: GEORG FISCHER AKTIENGE-
SELLSCHAFT
Mühlentalstrasse 105
CH-8201 Schaffhausen(CH)

(72) Erfinder: Kunz, Peter
Breitenaustrasse 156
CH-8200 Schaffhausen(CH)

**Beschreibung**

Die Erfindung betrifft ein Verfahren zum Verschweissen von rohrförmigen Teilen aus einem Thermoplast, wie es im Oberbegriff von Anspruch 1 gekennzeichnet ist und eine für die Durchführung des Verfahrens erforderliche Einrichtung, wie sie im Oberbegriff von Anspruch 2 beschrieben ist.

Es ist bekannt (z. B. DE-B-2212055), die stirnseitigen Enden von rohrförmigen thermoplastischen Teilen mittels eines elektrisch aufheizbaren Heizspiegels zu erhitzen und die in der Einrichtung eingespannten Teile nach dem Wegschwenken des Heizspielgels mit den Stirnseiten aneinanderzudrücken, so dass eine Stumpfschweissung entsteht. Nachteilig ist hierbei, dass insbesondere am Aussen- und auch am Innenumfang ein Schweisswulst entsteht, welcher den Durchflussquerschnitt verringert und den Strömungswiderstand erhöht.

Durch den direkten Kontakt der Enden der rohrförmigen Teile mit dem Heizspiegel kann dieser beim Aufschmelzen durch aufgeschmolzenes Material leicht verschmutzen, so dass für eine einwandfreie Schweissung öfters eine Reinigung des Heizspiegels erforderlich ist.

Das Dokument EP-A-0020915 zeigt eine Schweisseinrichtung zum wulstfreien, stirnseitigen Zusammenschweissen von Rohren, wobei die zum Plastifizieren des thermoplastischen Werkstoffes erforderliche Heizenergie durch Heizbacken erfolgt, welche die stirnseitig aneinanderstossenden Rohre umschliesst und die Rohrenden vom Aussenumfang her durch direkten Kontakt aufheizt.

Durch diese Wäremübertragung ist eine lange Heizzeit notwendig, wobei für das erforderliche Temperaturprofil in Rohrlängsrichtung neben der Heizzone je eine Kühlzone angeordnet ist.

Da für eine gute Schweissverbindung das thermoplastische Material bis zum Rohr-Innenumfang plastifiziert werden muss, ergeben sich speziell bei grösseren Wandstärken lange Heizzeiten, wobei bei empfindlichen Thermoplasten am Aussenumfang bereits eine nachteilige Materialüberhitzung stattfinden kann.

Diese Schrift zeigt auch eine innere Abstützungseinrichtung, wobei jedoch die Aufweitung der Blase bereits vor Beginn der Schweissung erfolgt.

Ausgehend von dem zuletzt genannten Stand der Technik ist es Aufgabe der vorliegenden Erfindung, ein Verfahren und eine dafür erforderlichen Einrichtung zum nut- und wulstfreien stirnseitigen Verschweissen thermoplastischer rohrförmiger Teile zu schaffen, welches kurze Aufheizzeiten auch bei grösseren Wandstärken ermöglicht und einwandfreie Schweissverbindungen gewährleistet.

Erfindungsgemäss wird diese Aufgabe durch die kennzeichnenden Verfahrensmerkmale von Anspruch 1 und die kennzeichnenden Einrichtungsmerkmale von Anspruch 2 gelöst.

Vorteilhafte Ausgestaltungen der Erfindungen sind in den davon abhängigen Ansprüchen gekennzeichnet.

Durch das Aufheizen der stirnseitigen Enden mittels Strahlungswärme wird eine einigermassen gleichmässige Plastifizierung bis zum Innenumfang erreicht, wobei durch das berührungslose Aufheizen kein Verschmutzen von Heizbacken möglich ist.

Durch die aufschiebbare Aussen-Abstützringe und durch die aufweitbare Abstützung der Innenwand wird am Aussen- und Innenumfang trotz dem axialen Zusammenschieben nach dem Erhitzen eine feste nut- und wulstfreie Schweissverbindung erzeugt.

Der für eine gute Schweissung erforderliche Schweissdruck wird durch das gegenseitige Zusammendrücken der Rohrenden mittels einem einstellbaren Druck und durch den Innendruck beim Aufweiten der Innen-Abstützvorrichtung gegen die vorgängig aufgeschobenen Aussen-Abstützringe erreicht.

Die Erfindung ist in den beiliegenden Zeichnungen beispielsweise schematisch dargestellt und nachfolgend beschrieben.
Es zeigen:

Fig. 1     das Schweissverfahren mit einer schematisch dargestellten Einrichtung in einer ersten Arbeitsphase

Fig. 2     das Schweissverfahren in einer zweiten Arbeitsphase und

Fig. 3     das Schweissverfahren in einer dritten Arbeitsphase.

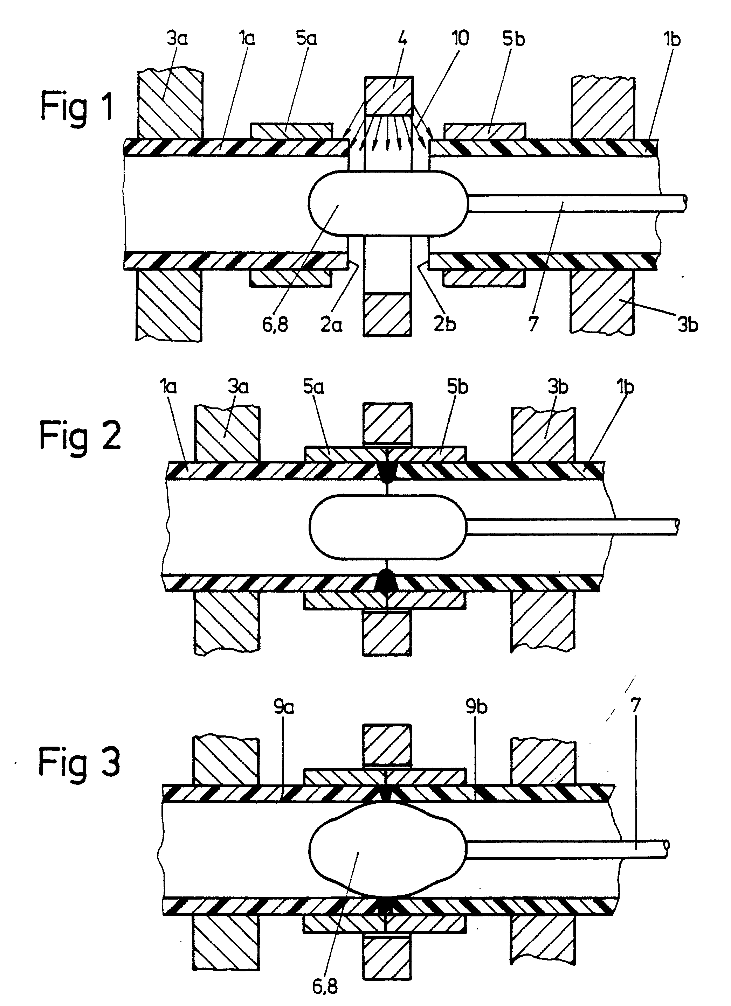

Fig. 1 zeigt die Enden zweier rohrförmiger Teile 1a und 1b, welche koaxial mit Distanz zueinander in Spannvorrichtungen 3a, 3b gehalten sind. Zwischen den Enden ist eine ringförmige Heizvorrichtung 4 angeordnet, welche Strahlungswärme erzeugt.

Auf den rohrförmigen Teilen 1a, 1b sind mit Abstand zu deren Endstirnflächen 2a, 2b Aussen-Abstützringe 5a, 5b angeordnet, welche axial zueinander verschiebbar sind und deren Aussendurchmesser kleiner ist als der Innendurchmesser der Heizvorrichtung 4. Im Innenraum der Enden der rohrförmigen Teile 1a, 1b ist eine aufweitbare Innen-Abstützvorrichtung 6 angeordnet, welche mit einem Zugstrang 7 versehen ist. Die Innen-Abstützvorrichtung 6 ist vorzugsweise als aufweitbare Blase 8 ausgebildet, deren Mantel aus einem wärmebeständigen Elastomer oder Silikon besteht. Das Aufweiten der Blase 8 kann z.B. mechanisch durch axiales Zusammenziehen der Blase bei Betätigung durch den Zugstrang erfolgen. Eine einfache Aufweitung der Blase 8 ist auch möglich, wenn der Zugstrang 7 als Schlauch ausgebildet ist, durch welchen der Blase ein Druckmedium wie z.B.

Druckluft zugeführt wird. Dadurch kann die Blase 8 mit einem einstellbaren Druck gegen die Innengewinde der rohrförmigen Teile 1a, 1b im Bereich der Stossstelle gedrückt werden.

Es besteht auch die Möglichkeit, dass im Inneren der Blase 8 ein bei Wärme sich ausdehnendes Medium und eine elektrische Heizvorrichtung angeordnet ist, so dass bei Stromzuführung über im Zugstrang angeordnete Kabel die Blase sich aufweitet.

Das Verschweissen der rohrförmigen Teile 1a, 1b geschieht wie folgt:

Gemäss Fig. 1 werden die Enden der rohrförmigen Teile 1a, 1b berührungslos mittels der von der Heizvorrichtung ausgehenden Strahlungswärme gemäss den Pfeilen 10 am Aussenumfang und stirnseitig bis in den Schmelzbereich des thermoplastischen Materials erhitzt.

Anschliessend werden zuerst die beiden vorgewärmten Aussen-Abstützringe 5a, 5b über die Enden bis zu ihrem Zusammenstoss geschoben und unmittelbar danach durch axiales Verschieben der Spannvorrichtungen 3a, 3b die Enden der rohrförmigen Teile 1a, 1b kontrolliert zusammengefügt, wobei dies vorzugsweise mit einem einstellbaren Druck geschieht.

Diese Arbeitsphase ist aus der Fig. 2 ersichtlich.

Dann wird, wie aus Fig. 3 ersichtlich, die Innen-Abstützvorrichtung 6 durch Aufweiten der Blase 8 im Bereich der Schweissverbindung an die Innenwand 9a, 9b der rohrförmigen Teile 1a, 1b gedrückt. Dabei wird das beim Zusammenfügen nach Innen verdrängte thermoplastische Material zurückgedrückt, so dass durch diesen Schweissdruck eine direkte und feste Schweissverbindung ohne innere und äussere Schweisswülste entsteht. Durch die Oberfläche der angedrückten Blase wird auch im Bereich der Schweissverbindung eine glatte Innenwand gebildet, so dass in der gesamten Rohrleitung einwandfreie Strömungsverhältnisse gegeben sind.

Nach Verfestigung der Schweissverbindung wird die Blase 8 wieder auf den ursprünglichen Umfang gem. Fig. 2 zurückverformt und mittels des Zugstranges 7 aus einem Ende des Rohrstranges herausgezogen. Zum Herausnehmen der verschweissten rohrförmigen Teile 1a, 1b sind die Spannvorrichtungen 3a, 3b, die Aussenabstützringe 5a, 5b und die Heizvorrichtung 4 jeweils zweiteilig und aufklappbar ausgebildet.

## Patentansprüche

1. Verfahren zum Verschweissen von rohrförmigen Teilen (1a,1b) aus einem Thermoplast, wobei die Enden der rohrförmigen Teile (1a,1b) mindestens bis zum Erweichungspunkt aufgeschmolzen und zur Vermeidung von Wülsten beim Schweissen am Aussen- und am Innenumfang durch Abstützungen (5a, 5b,) vollkommen umschlossen werden, dadurch gekennzeichnet, dass die Enden der rohrförmigen Teile (1a,1b) am Aussenumfang und Stirnseitig berührungslos durch Strahlungswärme aufgeschmolzen werden, dass danach zwei vorgewärmte Abstützringe (5a,5b) am Aussenumfang über die Enden gegeneinander geschoben werden, wobei sofort anschliessend die Enden der rohrförmigen Teile kontrolliert mittels einem einstellbaren Druck zusammengefügt werden und dass anschliessend die aufweitbare Abstützung (6) gegen die Innenwand der zusammenstossenden Enden gedrückt wird.

2. Einrichtung zur Durchführung des Verfahrens nach Anspruch 1 mit die rohrförmigen Teile (1a,1b) koaxial haltenden Spannvorrichtungen (3a,3b) mit einer Heizvorrichtung (4), mit einer Aussen-Abstützvorrichtung (5a,5b) und einer aufweitbaren Innen-Abstützvorrichtung (6), dadurch gekennzeichnet, dass mindestens eine der Spannvorrichtungen (3a bzw. 3b) in axialer Richtung verschiebbar und die Heizvorrichtung (4) als ringförmige Wärme-Strahlungsquelle ausgebildet sind und dass die Aussen-Abstützvorrichtung axial zueinander verschiebbare, aufwärmbare Aussen-Abstützringe (5a,5b) aufweist.

3. Einrichtung nach Anspruch 2, dadurch gekennzeichnet, dass die Heizvorrichtung (4) und die Aussen-Abstützringe (5a,5b) in Achsrichtung der rohrförmigen Teile (1a,1b) zweiteilig und aufklappbar ausgebildet sind.

4. Einrichtung nach einem der Ansprüche 2 oder 3, dadurch gekennzeichnet, dass die Innen-Abstützvorrichtung (6) als elastische Blase (8) ausgebildet und mit einem Zugstrang (7) versehen ist.

## Claims

1. Process for welding tubular parts (1a, 1b) made from a thermoplastic material, the ends of the tubular parts (1a, 1b) being melted at least up to the softening point and to avoid beads during welding on the outer and the inner periphery are completely enclosed by supports (5a, 5b), characterised in that the ends of the tubular parts (1a, 1b) on the outer periphery and on the end face are melted, without contact, by radiation heat, in that after that two preheated support rings (5a, 5b) on the outer periphery are pushed against each other over the ends and immediately after this the ends of the tubular parts are joined in a controlled way by means of an adjustable pressure and in that then the expandable support (6) is pressed against the inner wall of the mutually abutting ends.

2. Device for carrying out the process according to claim 1, having clamping devices (3a, 3b) coaxially holding the tubular parts (1a, 1b), with a heating device (4), an outer support device (5a, 5b) and an expandable inner support device (6), characterised in that at least one of the clamping devices (3a or 3b) is movable in the axial direction and the heating device (4) is constructed as an annular heat-radiation source, and in that the outer support device has heatable outer support rings (5a, 5b) axially movable with respect to each other.

3. Device according to claim 2, characterised in that the heating device (4) and the outer support rings (5a, 5b) are formed in the axial direction of the tubular parts (1a, 1b) in two parts and openable by hinges.

4. Device according to one of claims 2 or 3, characterised in that the inner support device (6) is formed as a resilient bubble (8) and is provided with a pull line (7).

**Revendications**

1. Procédé pour assembler par soudage des pièces tubulaires (1a, 1b) en matière thermoplastique, dans lequel les extrémités desdites pièces (1a, 1b) sont plastifiées au moins jusqu'au point de ramollissement et entourées complètement aux périphéries intérieure et extérieure par des moyens de soutien (5a, 5b) afin d'éviter la formation de cordons de soudure, caractérisé en ce qu'on plastifie les pièces tubulaires (1a, 1b) à la périphérie extérieure et à la face frontale en y appliquant sans contact direct de la chaleur rayonnante, en ce qu'ensuite, on pousse l'un vers l'autre sur la périphérie extérieure, en passant par les extrémités, deux anneaux de soutien préchauffés, puis immédiatement après, on joint les extrémités des pièces tubulaires de manière contrôlée, à l'aide d'une pression réglable, et en ce qu'ensuite on presse des moyens de soutien intérieurs (6) expansibles contre la paroi intérieure des extrémités jointes bout à bout.

2. Dispositif pour la mise en oeuvre du procédé selon la revendication 1, comportant des dispositifs de serrage (3a, 3b) pour maintenir coaxialement les pièces tubulaires (1a, 1b), un dispositif de chauffage (4), un dispositif de soutien extérieur (5a, 5b) et un dispositif de soutien intérieur (6), caractérisé en ce qu'au moins un des dispositifs de serrage (3a ou 3b) est déplaçable axialement, le dispositif de chauffage (4) étant constitué par une source de chaleur rayonnante annulaire, et en ce que le dispositif de soutien extérieur comprend des anneaux de soutien extérieurs (5a, 5b) axialement déplaçables l'un par rapport à l'autre et susceptibles d'être réchauffés.

3. Dispositif selon la revendication 2, caractérisé en ce que le dispositif de chauffage (4) et les anneaux de soutien extérieurs (5a, 5b) sont chacun constitués par deux éléments, vus en direction axiale des pièces tubulaires (1a, 1b) et divisibles par pivotement.

4. Dispositif selon la revendication 2 ou 3, caractérisé en ce que le dispositif de soutien intérieur (6) est formé d'une vessie élastique (8) et comporte un organe de traction (7).

Fig 1

Fig 2

Fig 3